# EUROPEAN PATENT SPECIFICATION

(11) **EP 3 187 285 B1**
(45) Date of publication and mention of the grant of the patent: **05.07.2023**
(21) Application number: 15835169.2
(22) Date of filing: 18.03.2015
(51) Int. Cl.: B22F 1/00, B22F 3/16, B29C 67/00, B33Y 70/00, C22C 32/00, B22F 3/105, B22F 1/052, B22F 10/28, B33Y 70/10

(54) **POWDER FOR LAYER-BY-LAYER ADDITIVE MANUFACTURING, AND PROCESS FOR PRODUCING OBJECT BY LAYER-BY-LAYER ADDITIVE MANUFACTURING**
PULVER ZUR SCHICHTWEISEN GENERATIVEN FERTIGUNG UND VERFAHREN ZUR HERSTELLUNG EINES OBJEKTS DURCH SCHICHTWEISE GENERATIVEN FERTIGUNG
POUDRE POUR FABRICATION ADDITIVE COUCHE PAR COUCHE ET PROCÉDÉ POUR LA PRODUCTION D'OBJET PAR FABRICATION ADDITIVE COUCHE PAR COUCHE

(30) Priority: 27.08.2014 JP 2014172169
(43) Date of publication of application: 05.07.2017
(73) Proprietor: Proterial, Ltd., Tokyo 135-0061 (JP)
(72) Inventor: KUWABARA, Kousuke, Tokyo 100-8280 (JP); KATO, Takahiko, Tokyo 100-8280 (JP); YAMAGA, Kenji, Tokyo 100-8280 (JP); AOTA, Kinya, Tokyo 100-8280 (JP); TAKAHASHI, Isamu, Tokyo 100-8280 (JP); FUJIEDA, Tadashi, Tokyo 100-8280 (JP); SATAKE, Hiroyuki, Tokyo 100-8280 (JP)
(74) Representative: MERH-IP Matias Erny Reichl Hoffmann Patentanwälte PartG mbB
(86) International application number: PCT/JP2015/057972
(87) International publication number: WO 2016/031279

(56) References cited:
- JP-A- 2009 203 543
- JP-A- 2010 202 928
- JP-A- 2010 202 928
- JP-A- 2011 021 218
- JP-A- 2011 184 708
- JP-A- 2011 184 708
- John A. Slotwinski ET AL: "Porosity Measurements and Analysis for Metal Additive Manufacturing Process Control", Journal of Research of the National Institute of Standards and Technology, vol. 119, 1 October 2014 (2014-10-01), page 494, XP055680251, DOI: 10.6028/jres.119.019

## Description

### Technical Field

The present invention relates to a powder for additive manufacturing and a method for producing a multi-layer shaped object.

### Background Art

Additive manufacturing using a metal powder as a raw material is known as a technique capable of directly obtaining a member having a three-dimensional shape. Such a technique is roughly classified into a selective beam melting method in which a powder previously spread in a layer (powder bed) is locally melted by a heat source such as a laser or electron beam and solidified or sintered to form a shape, and a fused deposition modeling method in which a sprayed powder is melted by a heat source and solidified. Either of these methods is capable of forming a three-dimensional multi-layer shaped object by melting of a powder and solidification or sintering.

In additive manufacturing, a metal powder is required to have flowability to be spread in a layer or sprayed. For example, PTL 1 discloses an additive manufacturing method in which the surface of a powder is coated with a surfactant to prevent agglomeration of the powder to improve the flowability of the powder.

### Citation List

### Patent Literature

PTL 1: JP 2005-533877 A

In JP 2009 203543 A a copper-based metal powder is described, to be used as a raw material for powder metallurgy.

Document JP 2011 021218 A discloses a powder material for additive manufacturing capable of directly sintering a metal product or a practical prototype for an application that is placed in a high temperature environment or requires high strength. A thin layer of powder material is selectively irradiated with a laser beam to sinter, melt or solidify the thin layer, and repeatedly laminate the sintered or melted / solidified thin layer to perform three-dimensional modeling.

### Summary of Invention

### Technical Problem

However, the sphericity of a powder widely varies according to a production method. A powder formed by gas atomization has a shape close to a perfect sphere, and is therefore excellent in flowability. However, a powder formed by water atomization, electrolysis, or crushing is likely to have low sphericity. The method disclosed in the above patent literature has a problem that the flowability of a powder at the time when the powder contains a powder having low sphericity is not sufficiently taken into consideration.

It is therefore an object of the present invention to provide a method for producing a multi-layer shaped object according to claim 1.

### Solution to Problem

In order to achieve the above object, for example, structures described in claims are adopted.

### Advantageous Effects of Invention

According to the present invention, it is possible to improve the flowability of a powder even when the powder contains a powder having low sphericity.

### Brief Description of Drawings

[FIG. 1] FIG. 1 is a drawing showing the concept of a powder for additive manufacturing according to an embodiment of the present invention.
[FIG. 2] FIG. 2 is a drawing showing the concept of an additive manufacturing method using the powder for additive manufacturing according to the embodiment of the present invention.
[FIG. 3] FIG. 3 is a drawing showing a series of steps of the additive manufacturing method of the present invention.

### Description of Embodiments

Hereinbelow, embodiments according to the present invention will be described in detail with reference to the drawings. It is to be noted that the present invention is not limited to the embodiments described here, and the embodiments may be appropriately combined or modified without changing the scope of the present invention.

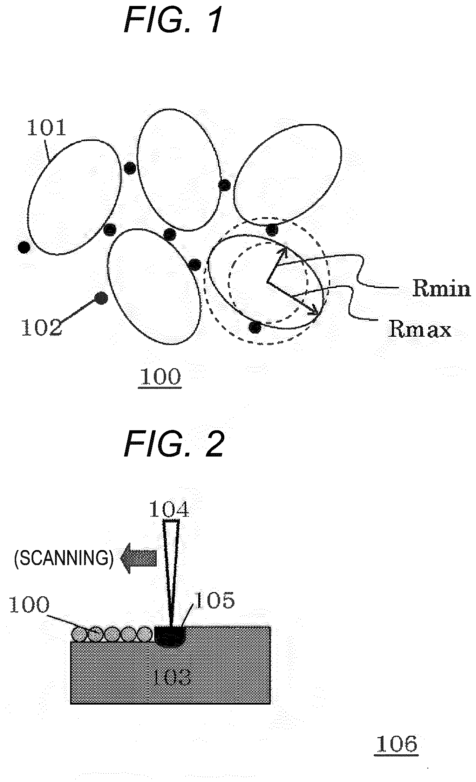

The structure of a powder for additive manufacturing 100 used in a method according to the present invention is shown in FIG. 1. The powder for additive manufacturing is a mixture of a first metal powder having an average diameter of 10 µm or more but 200 µm or less and a second powder whose sphericity is higher than that of the first metal powder and whose average diameter is 1/10 or less of that of the first metal powder, wherein a volume fraction of the first metal powder per total volume of the powder is 99% or more, and a volume fraction of the second powder is less than 1%.

It is to be noted that in this application, sphericity is used as an indicator of shape deviation from a perfect sphere having the highest flowability. More specifically, the sphericity is represented as the ratio between the radius of a minimum circumscribed sphere Rmax and the radius of a maximum inscribed sphere Rmin (Rmin/Rmax), wherein the minimum circumscribed sphere and the maximum inscribed sphere have, as their centers, the center of a least-squares mean sphere of the surface of a powder particle. A perfect sphere has a sphericity of 1, and a shape deviated from a sphere, such as an oval sphere or an oblate sphere, has lower sphericity between 0 and 1.

The material of the first metal powder 101 is selected according to a multi-layer shaped object to be formed or an additive manufacturing method that will be described later. Examples of the material include, but are not limited to, alloys containing Al, Co, Cr, Fe, Ni, or the like. The powder for additive manufacturing 100 is almost occupied by the first metal powder 101, and therefore a resulting shaped object has almost the same composition as the first metal powder 101.

In this embodiment, even when the first metal powder 101 used as a main component of a multi-layer shaped object has a shape deviated from a perfect sphere and therefore has low sphericity, the flowability of the first metal powder 101 can be improved by mixing with the second powder 102 that will be described later, which makes it possible to increase the types metal powders that can be applied as the first metal powder 101 for additive manufacturing.

The first metal powder has an average diameter of 10 µm or more but 200 µm or less. When the first powder has an average diameter of 10 um or more, flying-up or suspension of the alloy powder is suppressed, or oxidation reactivity of a metal is reduced so that a risk of dust explosion or the like is reduced. On the other hand, when the first powder has an average diameter of 200 um or less, a solidified layer formed in additive manufacturing is likely to have a smooth surface. When the solidified layer has a smooth surface, there is an advantage that the powder is easily spread on the solidified layer. Further, the output of a heating means for melting the alloy powder can be reduced, and therefore the melting rate of the alloy powder or the range of a region heated during localized heating of the alloy powder is easily controlled, which makes it easy to ensure the modeling accuracy of an alloy structure or the uniformity of a solidified tissue.

The average diameter of the first metal powder 101 is defined as an arithmetic average of the maximum and minimum values of the actual measured diameter of a single powder particle (distance between two parallel planes tangent to the actual surface of a single powder particle). The first metal powder preferably has a sphericity of 0.4 or more.

A method for producing the powder may be an atomization method, a melt spinning method, a rotating electrode method, a crushing method, a reductive method, an electrolytic method, a chemical synthesis method, or the like, and is appropriately selected according to the material, diameter, or production volume of the first metal powder 101 to be used.

The second powder 102 has an average diameter that is 1/10 or less of that of the first metal powder 101 and a sphericity higher than that of the first metal powder 101. The definition of the average diameter of the second powder is the same as that of the first powder. When having an average diameter that is 1/10 or less of that of the first metal powder 101, the second powder 102 easily enters gaps naturally present between the particles of the first metal powder 101. When entering the gaps, the second powder 102 reduces friction between the particles of the first metal powder 101 due to its higher sphericity than the first metal powder 101 so that the first metal powder 101 becomes slippery, which makes it possible to improve the flowability of the first metal powder 101.

The second powder 102 preferably has a sphericity of 0.8 or more but 1 or less. When the sphericity is 0.8 or more, the rolling action of the second powder 102 having high sphericity prominently appears when the second powder 102 enters gaps between the particles of the first metal powder 101, which is preferred from the viewpoint of reducing friction. Further, the second powder 102 is preferably made of ceramic because such a second powder 102 is likely to have a smooth surface, which is preferred from the viewpoint of improving the flowability of the first metal powder 101.

The second powder 102 is added at a volume fraction of 0.001% or more but 1% or less. When the volume fraction of the second powder 102 is 0.001% or more, the effect of improving flowability is sufficiently obtained, and when the volume fraction of the second powder 102 is 1% or less, flying-up or suspension of the second powder 102 can be suppressed.

A method for producing such a powder may be an atomization method, a melt spinning method, a rotating electrode method, a chemical synthesis method (e.g., a sol-gel method or a suspension polymerization method), or the like, and is appropriately selected according to the material, diameter, or production volume of the second powder 102 to be used. Various materials including inorganic materials, metals, resin materials, and the same material as the first metal powder 101 can be used as the material of the second powder 102 as long as the above requirements are satisfied. For example, oxide particles with high sphericity obtained by a melting method or a sol-gel method or polymeric microparticles obtained by a suspension polymerization method are preferably used. Particularly, when alumina or silica having a melting point higher than that of the first metal powder 101 is used and only the first metal powder 101 is melted to form a shaped object, the alumina or silica is distributed as a fine dispersion element having high sphericity also in the shaped object, which is preferred from the viewpoint of obtaining the effect of improving strength or heat resistance.

The first metal powder 101 and the second powder 102 are uniformly mixed using a mixer, a homogenizer, a ball mill, or the like to obtain the powder for additive manufacturing 100. This mixing process may be performed at some stage before additive manufacturing.

A method for producing a multi-layer shaped object 103 according to this embodiment is shown in FIG. 2 as an example of a selective beam melting method. The multi-layer shaped object 103 is formed by repeating a step in which a molten portion 105 is formed by locally melting the powder for additive manufacturing 100 with a heating means 104 and then solidified. The powder for additive manufacturing 100 in a desired position is melted by scanning with the heating means 104 and solidified so as to be integrated with the surroundings to define the shape of the multi-layer shaped object 103. This series of localized melting and solidification processes is performed using an additive manufacturing device 106.

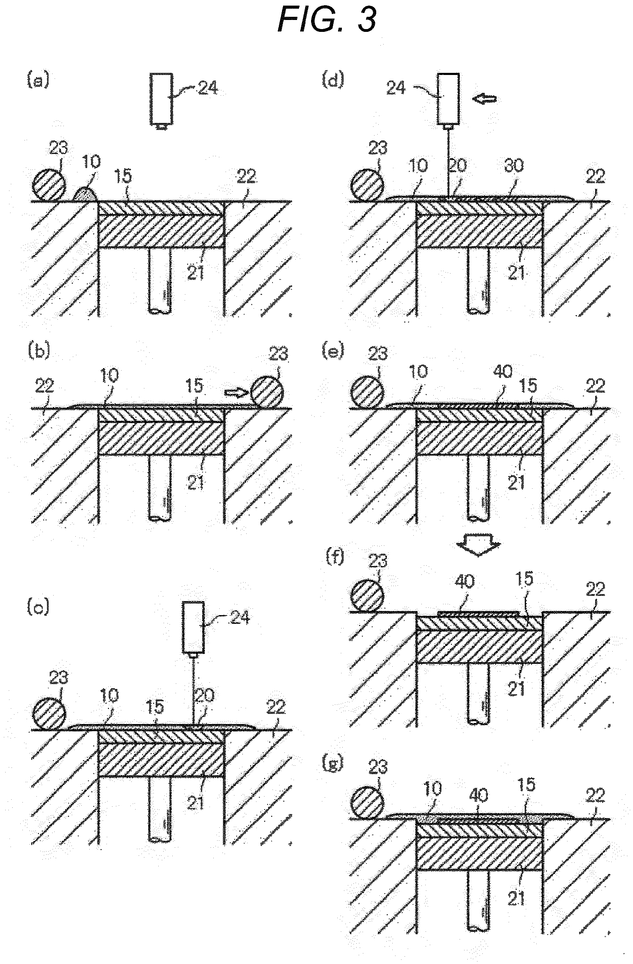

The method for producing the multi-layer shaped object 103 according to this embodiment is shown step by step in FIG. 3.

In the method for producing the multi-layer shaped object according to this embodiment, an additive manufacturing step shown in FIGs. 3(a) to 3(g) in order is repeated to perform three-dimensional modeling of a multi-layer shaped object. The additive manufacturing step can be performed using a conventional additive manufacturing device for metal powder that has generally been used. A mixture (alloy powder 10) of the first metal powder 101 and the second powder 102 prepared in a powder preparation step is used as a raw material powder in the additive manufacturing step. The heating means of the additive manufacturing device to be used may be, for example, an appropriate means based on the principle of beam heating such as electron beam heating, laser heating, microwave heating, plasma heating, focused radiation heating, or high-frequency heating. Among them, the additive manufacturing device is particularly preferably based on electron beam heating or laser heating. This is because electron beam heating or laser heating makes it possible to reduce the output of a heat source, achieve a micro region where the alloy powder 10 is heated, and relatively easily control the modeling accuracy of a multi-layer structure.

More specifically, the additive manufacturing step includes a powder spreading step and a solidified layer forming step. In the additive manufacturing step, a solidified tissue in a layer form (solidified layer) is formed through steps shown in FIGs. 3(a) to 3(g) in order, and the formation of a solidified tissue in a layer form (solidified layer) is repeated to form a multi-layer structure as an assembly of the solidified tissues.

As shown in FIG. 3(a), the additive manufacturing device is provided with an elevating piston having a base material-mounting stage 21 at its top end. Around the base material-mounting stage 21, a processing table 22 that is not worked with the piston is provided, and a powder feeder (not shown) that supplies the alloy powder 10 onto the processing table 22, a recoater 23 that spreads the supplied alloy powder 10, and a heating means 24 that heats the alloy powder 10 are provided. An air blast that removes the alloy powder 10 on the processing table 22, a temperature controller, or the like may be provided. The processing table 22 and these tools are housed in a chamber. The atmosphere in the chamber is a vacuum atmosphere or an inert gas atmosphere such as argon gas selected according to the type of the heating means 24, and the pressure or temperature of the atmosphere is monitored. Before additive manufacturing, a base material 15 is previously mounted on the base material-mounting stage 21, and the position of the base material-mounting stage 21 and the position of the processing table 22 are adjusted so that the surface (top surface) of the base material 15 on which modeling is to be performed and the top surface of the processing table 22 are flush with each other.

The base material 15 to be used may be any appropriate material as long as the material has resistance to heat generated by the heating means 24. In this multi-layer structure production method, additive manufacturing of a multi-layer structure is performed on the surface of the base material 15 on which modeling is to be performed, and therefore a shaped object in which the base material 15 and the multi-layer structure are integrated with each other is obtained. Therefore, the base material 15 to be used may be one having an appropriate shape such as a flat plate shape, assuming that the base material 15 is separated from the multi-layer structure by cutting or the like. Alternatively, the base material 15 to be used may be a structural member, a mechanical member, or the like having any shape and a surface on which modeling is to be performed, assuming that the base material 15 and the multi-layer structure function in an integrated state.

In the powder spreading step, the prepared alloy powder 10 is spread on the surface on which modeling is to be performed. That is, in the first powder spreading step in additive manufacturing, the alloy powder 10 is spread on the base material 15 set in the additive manufacturing device. As shown in FIG. 3(b), spreading of the alloy powder 10 can be performed in such a manner that the recoater 23 sweeps the surface (base material 15) on which modeling is to be performed while passing therethrough so that the alloy powder 10 supplied onto the processing table 22 by the powder feeder (not shown) (see FIG. 3(a)) is spread in a thin layer. Even when the first metal powder as the main component of a multi-layer structure has low sphericity, the alloy powder 10 is more easily spread as compared to a case where only the first metal powder is used, because the first metal powder is mixed with the second powder that makes the first metal powder more slippery. The thickness of the formed thin layer of the alloy powder 10 can be appropriately adjusted according to the output of the heating means that melts the alloy powder 10 or the average particle diameter of the alloy powder 10, but is preferably in the range of about 10 µm or more but 1000 µm or less.

In the solidified layer forming step, the spread alloy powder 10 is melted by localized heating and then solidified, that is, a plane in which the alloy powder 10 is spread is scanned to form a solidified layer 40 in a region to be heated by localized heating. The formation of the solidified layer 40 (see FIG. 3(e)) that will be described later is performed by scanning a region to be heated with the heating means 24 based on two-dimensional shape information obtained from three-dimensional shape information (e.g., 3D-CAD data) representing the three-dimensional shape of a multi-layer structure to be produced.

As shown in FIG. 3(c), localized heating of the alloy powder 10 is performed by the heating means 24 only in a region to be heated on the spread alloy powder 10 so that part of the spread alloy powder 10 is selectively melted to form a minute molten pool (molten portion 20). The diameter of the molten portion 20 formed by melting the alloy powder 10 is preferably 1 mm or less. By limiting the molten portion 20 to such a minute size, the modeling accuracy of a multi-layer structure or the uniformity of elemental composition of a solidified tissue can be improved.

As shown in FIG. 3(d), the alloy powder 10 is locally heated by moving the heating means 24 in parallel to the surface on which modeling is to be performed to scan a region to be heated. The scanning of a region to be heated can be performed not only by scanning with the main body of the heating means 24 but also by scanning with the irradiation spot of a heat source such as a galvanometer mirror, and is therefore performed by an appropriate system such as raster scanning. At this time, overlap scanning with a plurality of radiation sources may be performed to flatten the density irradiation energy. Then, localized heating of a region where the alloy powder 10 is not yet melted is newly performed by scanning of a region to be heated, and heating of a region where the molten portion 20 has already been formed by melting the alloy powder 10 is stopped to cool and solidify the molten portion 20 at atmospheric temperature. A solidified portion 30 formed by solidifying the molten portion 20 is integrated with the base material or the solidified portion 30 that has already been formed so that a dense assembly of the solidified portions 30 is formed.

The scanning speed, output, energy density, and scanning width of the heating means 24 may be appropriately adjusted based on the elemental composition and particle size distribution of the alloy powder 10, the material of the base material 15, the positional relationship between the molten portion 20 and the solidified portion 30, and heat conduction or heat emission estimated from the temperature in the chamber. Further, the cooling temperature of the molten portion 20 may be set in consideration of dimension change or thermal distortion according to the elemental composition of a multi-layer structure. The strength distribution of a resulting multi-layer structure can be made uniform or residual stress or surface roughness of a resulting multi-layer structure can be reduced by performing scanning while maintaining the size of the molten portion 20, the rate of melting, the rate of cooling, or the interval of time between melting and cooling in their respective predetermined ranges.

As shown in FIGs. 3(c) to 3(e), a solidified layer 40 having predetermined two dimensional shape and thickness is formed by repeating melting of the alloy powder 10 and solidification on the base material 15 mounted on the base material-mounting stage 21 to form an assembly of the solidified portions 30. After the formation of the solidified layer 40, the unmelted alloy powder 10 remaining around the solidified layer 40 or on the top surface of the solidified layer 40 may be removed by an air blast. As shown in FIG. 3(f), the base material-mounting stage 21 is lowered by a height corresponding to the thickness of the formed solidified layer 40 to adjust the position of the base material-mounting stage 21 and the position of the processing table 22 so that the top surface of the solidified layer 40 as a new surface on which modeling is to be performed and the top surface of the processing table 22 are flush with each other.

After the position adjustment, the powder spreading step is performed in the same manner as shown in FIGs. 3(a) and 3(b) to spread the alloy powder 10 newly supplied onto the top surface of the solidified layer 40 that has already been formed as shown in FIG. 3(g). The second or more powder spreading step is performed on the powder that has already been spread or on the solidified layer. The spread powder or the solidified layer has larger surface irregularities than the substrate, and therefore the first metal powder having low sphericity is likely to be held by the surface irregularities. However, in this embodiment, the first metal powder is mixed with the second powder and is therefore slippery, which makes it easy to spread the alloy powder 10 as compared to a case where only the first metal powder is spread.

Then, the solidified layer forming step is performed in the same manner as shown in FIGs. 3(c) to 3(e) to deposit the next solidified layer 40. The deposited solidified portion 30 is integrated with part of the solidified layer 40 as a lower layer and densely sintered. Then, the powder spreading step and the solidified layer forming step are repeated in the same manner on the top surface of the formed solidified layer 40 as a surface on which modeling is to be performed, which makes it possible to form a multi-layer structure having desired shape and size by additive manufacturing.

According to such a method for producing a multi-layer structure in which such an additive manufacturing step is repeated to perform three-dimensional modeling, it is possible to produce a multi-layer structure having desired shape and size as an assembly of minute solidified tissues. Further, the elemental composition of each of the minute solidified tissues (solidified portions 30) well reflects the elemental composition of the alloy powder used, which makes it possible to form a solid solution phase whose elemental composition distribution and mechanical strength distribution are highly uniform. Further, a solidified tissue (solidified layer 40) whose crystal growth is oriented in almost one direction can be deposited by forming solidified tissues (solidified portions 30) by heating in one direction, which makes it possible to form a multi-layer structure having high anisotropy.

The multi-layer shaped object 103 disclosed in this embodiment is excellent in modeling accuracy because the powder for additive manufacturing 100 has improved flowability. Further, at least part of the second powder 102 is present as a fine dispersion in a metal tissue formed by melting and sintering the first metal powder 101, which makes it possible to form a shaped object excellent in high-temperature strength or fatigue strength. Such properties are suitable for various applications such as various mechanical parts, molds, and medical implants, and can contribute to improvement in the dimensional accuracy or strength of each member.

Hereinbelow, examples and comparative examples will be described using the drawings.

### (Examples)

In Examples 1 to 5, a stainless powder formed by atomization (SUS316L powder, Höganäs Japan K.K.) was used as a first metal powder. The stainless powder was limited to one having a particle size distribution of 50 um to 100 um, and the stainless powder used had an average diameter of about 70 µm. Silica fine particles having an average diameter of about 0.03 um (NIPPON AEROSIL Co., Ltd.) were used as a second powder. The first metal powder had an average sphericity of about 0.7, and the second powder had an average sphericity of about 0.8. It was confirmed that the second powder had an average diameter that was less than 1/10 of the average diameter of the first metal powder and excellent sphericity. The first metal powder and the second powder were mixed so that a volume fraction shown in Table 1 was achieved, and were then stirred with a V mixer for 1 hour to obtain a powder for additive manufacturing.

The powder for additive manufacturing and a base material (carbon steel (S45C) plate material of 100 mm × 100 mm × 10 mm) were set in a selective laser melting device (EOS, M270), and a cylindrical multi-layer shaped object (diameter: 10 mm, height: 50 mm) was formed by repeating supply of the powder for additive manufacturing and localized melting by a heating means 104 comprising a laser, solidification, and cooling under a nitrogen atmosphere. Then, the multi-layer shaped object was cut from the base material.

### (Comparative Examples)

Comparative Example 1 was different from Example 1 in that the second powder was not mixed, and Comparative Examples 2 to 4 were different from Example 1 in the average diameter of the second powder and the volume fraction (mixing ratio) of the second powder. The other conditions were the same as those of Example 1. It is to be noted that the sphericity of silica fine particles with an average diameter of 12 µm (Denka Company Limited) used in Comparative Examples 3 and 4 was 0.9 or more that was the same as that of the silica fine particles described in Example 1.

### (Examples)

In Examples 6 to 10, a copper powder formed by an electrolytic method (Höganäs Japan K.K.) was used as a first metal powder. The copper powder was limited to one having a particle size distribution of 50 um to 100 µm, and the copper powder used had an average diameter of about 60 um. Alumina particles having an average diameter of 0.3 um (Denka Company Limited) were used as a second powder. The first metal powder had an average sphericity of about 0.4, and the second powder had an average sphericity of about 0.9. It was confirmed that the second powder had a diameter that was less than 1/10 of the diameter of the first metal powder and excellent sphericity. The first metal powder and the second powder were mixed so that a volume fraction shown in Table 2 was achieved, and were then stirred with a V mixer for 1 hour to obtain a powder for additive manufacturing.

The powder for additive manufacturing and a base material (carbon steel (S45C) plate material of 100 mm × 100 mm × 10 mm) were set in a selective laser melting device (EOS, M270), and a cylindrical multi-layer shaped object (diameter: 10 mm, height: 50 mm) was formed by repeating supply of the powder for additive manufacturing and localized melting by a heating means comprising a laser, solidification, and cooling under a nitrogen atmosphere. Then, the multi-layer shaped object was cut from the base material.

### (Comparative Example)

Comparative Example 5 was the same as Example 6 except that the second powder was not mixed, and Comparative Example 6 was the same as Example 6 except that the first metal powder and the second powder used in Example 6 were mixed at a mixing ratio shown in Table 1.

### (Comparison of Results)

Each of the multi-layer shaped objects obtained in Examples and Comparative Examples was cut along a plane including a center line, and the thus obtained cross-section was observed to determine a void ratio and the volume fraction of the second particles shown in Table 1. Assuming that the second powder was uniformly dispersed in the shaped object, the value of area fraction of the second powder in the cross-section was used as the volume fraction of the second powder. It is to be noted that in Examples 1 to 5 and Comparative Example 2, the second powder had an average diameter as small as 0.03 µm, and in Comparative Examples 3 and 4, the second powder was not uniformly dispersed, and therefore the evaluation of the volume fraction of the second powder in the multi-layer shaped object was omitted. The multi-layer shaped objects whose void ratio was restricted to less than 5% were evaluated as excellent, and the other multi-layer shaped objects were evaluated as defective.

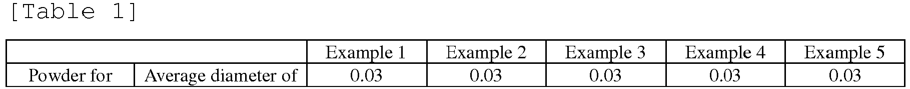

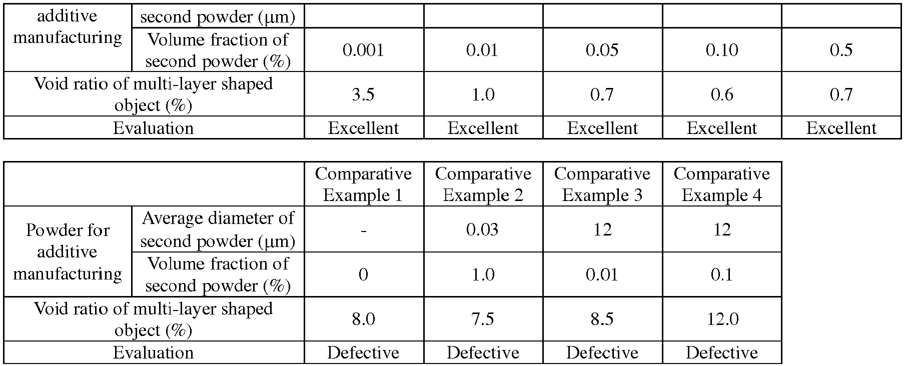

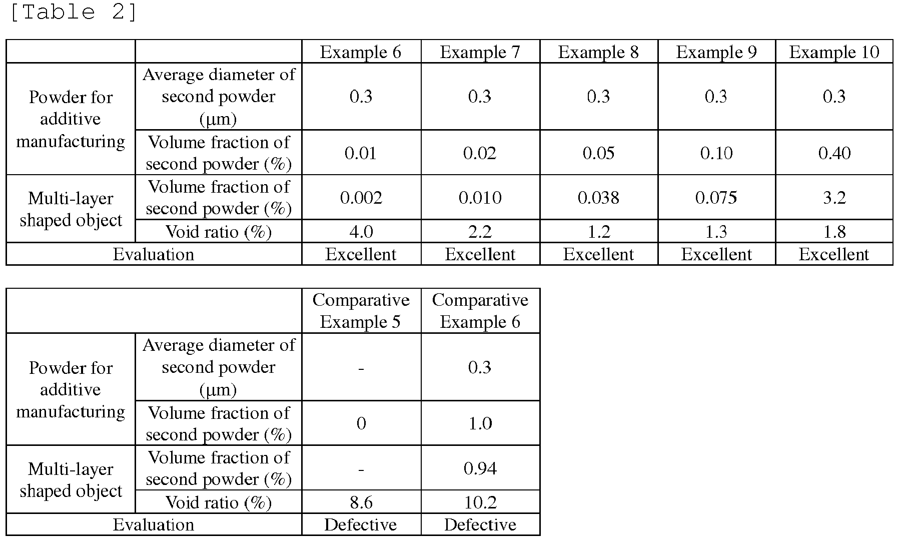

As shown in Tables 1 and 2, the powder used in each of Examples 1 to 10 had improved flowability as compared to the powder not containing the second powder used in each of Comparative Examples 1 and 5, and therefore voids in the powder before modeling were reduced. As a result, the void ratio of each of the multi-layer objects of Examples 1 to 10 obtained by the method according to the embodiment of the present invention could be restricted to a low value. Further, the second particles were dispersed in a minute amount in the tissue of each of the materials, which is expected to have the effect of dispersion strengthening.

On the other hand, as shown in Comparative Examples 2 and 6, the void ratio was increased under the condition where the second powder was contained at 1% or more. The reason for this is considered to be that the specific gravity of the second powder is lower than that of the first metal powder, and therefore when an excessive amount of the second powder is used, the second powder rises to the upper portion of the additive manufacturing powder during powder supply so that an absent portion is formed by rolling-up effect during modeling. Further, it was found that, as show in Comparative Examples 3 and 4, when the diameter of the second powder was larger than 1/10 of the diameter of the first metal powder, the second powder did not uniformly enter between the particles of the first metal powder so that the void ratio was increased. As described above, it was confirmed that the powder for additive manufacturing described in the embodiment according to the present invention could improve the modeling accuracy of a multi-layer structure and a fine particle dispersion effective as a reinforcing layer could be formed in the multi-layer structure.

### Reference Signs List

- 10: alloy powder
- 15: base material
- 20: molten portion
- 21: base material-mounting stage
- 22: processing table
- 23: recoater
- 24: heating means
- 30: solidified portion
- 40: solidified layer
- 100: powder for additive manufacturing
- 101: first metal powder
- 102: second powder
- 103: multi-layer shaped object
- 104: heating means
- 105: molten portion
- 106: additive manufacturing device
- 107: solidified portion
- 108: base material
- 109: non-molten portion

## Claims

1. A method for producing a multi-layer shaped object, comprising the steps of:
spreading, in a layer, a powder for additive manufacturing (100) obtained by mixing and then stirring a first metal powder (101) having an average diameter of 10 µm or more but 200 µm or less at a volume fraction of more than 99% and a second powder (102) whose sphericity is higher than that of the first metal powder and whose average diameter is 1/10 or less of that of the first metal powder at a volume fraction of 0,001% or more and less than 1%; and
forming a molten portion (20) by irradiating the spread powder for additive manufacturing with a beam and solidifying the molten portion (20) to form a solidified layer (40) in which at least part of the second powder (102) is present as a fine dispersion element in a metal tissue formed by melting and sintering the first metal powder, wherein the sphericity is represented as the ratio (Rₘₐₓ/Rₘᵢₙ) between the radius of a minimum circumscribed sphere Rₘₐₓ and the radius of a maximum inscribed sphere Rₘᵢₙ, and
the step of spreading a powder for additive manufacturing in a layer and the step of forming a solidified layer are repeated to form a plurality of solidified layers.

2. The method for producing a multi-layer shaped object according to claim 1, wherein
the second powder (102) has the sphericity of 0.8 or more.

3. The method for producing a multi-layer shaped object according to claim 1 or 2, wherein
the second powder (102) is made of ceramic.

4. The method for producing a multi-layer shaped object according to any of claims 1 to 3, wherein
the second powder (102) is made of silica or alumina.

5. The method for producing a multi-layer shaped object according to any of claims 1 to 4, wherein
the first metal powder (101) has a sphericity of 0.4 or more.

## Patentansprüche

1. Verfahren zum Erzeugen eines aus mehreren Schichten geformten Gegenstands, das die folgenden Schritte umfasst:
Ausstreuen eines Pulvers (100) zur Hilfsstoffherstellung in einer Schicht, das durch Mischen und anschließendes Umrühren eines ersten Metallpulvers (101), das einen durchschnittlichen Durchmesser von 10 µm oder größer, jedoch 200 µm oder kleiner aufweist, mit einem Volumenanteil von mehr als 99 % und eines zweiten Pulvers (102), dessen Kugelverhältnis größer als jenes des ersten Metallpulvers ist und dessen durchschnittlicher Durchmesser 1/10 oder kleiner als jener des ersten Metallpulvers ist, mit einem Volumenanteil von 0,001 % oder größer und kleiner als 1 % erhalten wird; und
Bilden eines geschmolzenen Abschnitts (20) durch Bestrahlen des ausgestreuten Pulvers zur Hilfsstoffherstellung mit einem Strahl und Verfestigen des geschmolzenen Abschnitts (20), um eine verfestigte Schicht (40) zu bilden, in der zumindest ein Anteil des zweiten Pulvers (102) als ein Feindispersionselement in einem Metallgewebe vorhanden ist, das durch Schmelzen und Sintern des ersten Metallpulvers gebildet wird, wobei das Kugelverhältnis als das Verhältnis (Rₘₐₓ/Rₘᵢₙ) zwischen dem Radius Rₘₐₓ einer minimalen umschriebenen Kugel und dem Radius Rₘᵢₙ einer maximalen eingeschriebenen Kugel dargestellt wird und
der Schritt des Ausstreuens eines Pulvers zur Hilfsstoffherstellung in einer Schicht und der Schritt des Bildens einer verfestigen Schicht wiederholt werden, derart, dass mehrere verfestigte Schichten gebildet werden.

2. Verfahren zum Erzeugen eines aus mehreren Schichten geformten Gegenstands nach Anspruch 1, wobei
das zweite Pulver (102) ein Kugelverhältnis von 0,8 oder größer aufweist.

3. Verfahren zum Erzeugen eines aus mehreren Schichten geformten Gegenstands nach Anspruch 1 oder 2, wobei
das zweite Pulver (102) aus Keramik hergestellt ist.

4. Verfahren zum Erzeugen eines aus mehreren Schichten geformten Gegenstands nach einem der Ansprüche 1 bis 3, wobei
das zweite Pulver (102) aus Siliziumdioxid oder Aluminiumoxid hergestellt ist.

5. Verfahren zum Erzeugen eines aus mehreren Schichten geformten Gegenstands nach einem der Ansprüche 1 bis 4, wobei
das erste Metallpulver (101) ein Kugelverhältnis von 0,4 oder größer aufweist.

## Revendications

1. Procédé de production d'un objet constitué de plusieurs couches, comprenant les étapes consistant à :
répartir, dans une couche, une poudre pour fabrication additive (100) obtenue en mélangeant et puis en agitant une première poudre métallique (101) ayant un diamètre moyen de 10 µm ou plus mais de 200 µm ou moins à une fraction volumique de plus de 99 % et une seconde poudre (102) dont la sphéricité est plus élevée que celle de la première poudre métallique et dont le diamètre moyen est de 1/10 ou moins de celui de la première poudre métallique à une fraction volumique de 0,001 % ou plus et de moins de 1 % ; et
former une portion fondue (20) en irradiant d'un faisceau la poudre pour fabrication additive répartie et en solidifiant la portion fondue (20) pour former une couche solidifiée (40) dans laquelle au moins une partie de la seconde poudre (102) est présente à titre d'élément de dispersion fine dans un tissu métallique formé par fusion et frittage de la première poudre métallique, dans lequel la sphéricité est représentée sous la forme du rapport (Rₘₐₓ/Rₘᵢₙ) entre le rayon d'une sphère circonscrite minimum Rₘₐₓ et le rayon d'une sphère inscrite maximum Rₘᵢₙ, et
l'étape consistant à répartir une poudre pour fabrication additive dans une couche et l'étape consistant à former une couche solidifiée sont répétées pour former une pluralité de couches solidifiées.

2. Procédé de production d'un objet constitué de plusieurs couches selon la revendication 1, dans lequel
la seconde poudre (102) a la sphéricité de 0,8 ou plus.

3. Procédé de production d'un objet constitué de plusieurs couches selon la revendication 1 ou 2, dans lequel
la seconde poudre (102) est faite à partir de céramique.

4. Procédé de production d'un objet constitué de plusieurs couches selon l'une quelconque des revendications 1 à 3, dans lequel
la seconde poudre (102) est faite à partir de silice ou d'alumine.

5. Procédé de production d'un objet constitué de plusieurs couches selon l'une quelconque des revendications 1 à 4, dans lequel
la première poudre métallique (101) a une sphéricité de 0,4 ou plus.
